# FASCICULE DE BREVET EUROPEEN

(11) **EP 0 711 522 B1**
(45) Date de publication et mention de la délivrance du brevet: **02.05.1997**
(21) Numéro de dépôt: 95420310.5
(22) Date de dépôt: 10.11.1995
(51) Int. Cl.: A47J 27/092

(54) **Soupape de verrouillage/déverrouillage d'un couvercle sur une cuve**
Verriegelungs-/Entriegelungsventil eines Decksel auf einem Gefäss
Valve for locking/unlocking a cover on a vessel

(30) Priorité: 10.11.1994 FR 9413984
(43) Date de publication de la demande: 15.05.1996
(73) Titulaire: SEB S.A., 69130 Ecully (FR)
(72) Inventeur: Chameroy, Eric, F-21260 Veronnes (FR)

(56) Documents cités:
- EP-A- 0 139 772
- WO-A-94/16605
- BE-A- 806 483
- DE-A- 3 330 656
- DE-U- 9 407 699
- FR-A- 1 057 543

## Description

La présente invention se rapporte au domaine technique général des dispositifs de verrouillage/déverrouillage d'un couvercle sur une cuve pour former un récipient de cuisson, de préférence sous pression.

La présente invention concerne une soupape de verrouillage/déverrouillage d'un couvercle sur une cuve pour former un récipient de cuisson sous pression, comprenant des moyens d'indication du niveau de la pression.

Elle concerne plus précisément une soupape de verrouillage pour couvercle de récipient de cuisson sous pression, constituée par un premier élément mobile axialement susceptible d'adopter une position étanche de verrouillage dans laquelle le couvercle du récipient ne peut être ouvert, ou une position non étanche de déverrouillage dans laquelle le couvercle du récipient peut être ouvert, un cylindre de coulissement étant ménagé dans la partie inférieure de la soupape de façon à ce que ledit cylindre soit en communication avec la pression ambiante du récipient.

Les récipients de cuisson sous pression comprennent en général un dispositif de verrouillage/déverrouillage ou des moyens de fermeture destinés à assurer la fermeture par verrouillage d'un couvercle sur une cuve, de manière à former un récipient de cuisson sous pression tel qu'un autocuiseur.

On connaît par exemple des récipients de cuisson sous pression dont le couvercle comprend des moyens d'ouverture/fermeture de type à baïonnette, à mâchoires, etc. Plusieurs types de moyens de sécurité connus applicables dans de multiples variantes prévoient des éléments avec mouvement relatif (angulaire, longitudinal ou axial), comportant des moyens de verrou, le plus souvent des ouvertures ou lumières, qui viennent s'aligner lorsque le couvercle est bien fermé. Un élément de verrouillage peut alors se positionner, par exemple sous l'effet de la pression s'établissant dans l'enceinte de cuisson, dans les moyens de verrou, immobilisant les éléments l'un par rapport à l'autre et empêchant de la sorte l'actionnement du mécanisme d'ouverture du couvercle, soit par prise avec un élément fixe de la cuve, soit par maintien des mâchoires en position de fermeture, etc.

Le document BE 806 483 décrit pour sa part une soupape de verrouillage/déverrouillage d'un couvercle sur une cuve selon le préambule de la revendication 1. Ce dispositif comprend un piston mobile axialement entre une position basse dans laquelle le couvercle est libre et une position haute de verrouillage où le couvercle ne peut être retiré. Les moyens utilisés dans ce dispositif font qu'il demeure vulnérable dans certaines conditions, notamment dans les cas suivants:

Tout d'abord, si les orifices 13 sont bouchés par une particule lors de la cuisson, la sécurité du dispositif peut être affectée; il pourrait y avoir établissement de la pression dans l'enceinte malgré le non verrouillage du couvercle; si les orifices 13 ainsi que l'orifice situé à la base de la chemise 12 (sous le piston) se bouchent simultanément, la sécurité du dispositif peut également être affectée; le piston peut rester en position basse malgré l'établissement de la pression dans l'enceinte. L'utilisateur peut alors ouvrir le couvercle avec les risques que cela implique.

Avec le dispositif décrit dans ce document, le seul élément mobile, le piston, sert à la fois de moyen de verrouillage et de moyen d'indication du niveau de la pression. Le corps est fixe. Il ne remplit pas de fonction de verrouillage.

Par ailleurs, on connaît des moyens permettant d'indiquer à l'utilisateur que la pression a atteint un niveau prédéterminé. Le document FR 1 057 543 décrit de tels moyens. Ces moyens sont indépendants et impliquent donc une modification importante de la construction de la cuve ou de son couvercle si on souhaite les intégrer. Il faut prévoir une ouverture, des moyens d'étanchéité, des moyens d'indication, etc, le tout respectant les normes de sécurité particulièrement contraignantes en vigueur pour les articles de cuisson à vapeur pressurisée. Le coût de revient d'une telle indication est tel que plusieurs fabricants préfèrent laisser tomber cette indication donnée à l'utilisateur afin d'être plus compétitifs au niveau du prix de vente de l'article. L'utilisateur est donc privé d'une indication qu'il apprécie, et qui permet d'optimiser l'utilisation de l'article de cuisson.

L'objet de la présente invention vise en conséquence à porter remède aux divers inconvénients énumérés précédemment, et à proposer une nouvelle soupape de verrouillage/ déverrouillage d'un récipient de cuisson permettant de s'assurer de manière simple et fiable, de la bonne position des moyens de fermeture et de la fermeture complète et sûre du couvercle sur la cuve, tout en indiquant à l'utilisateur le niveau de pression atteint dans l'enceinte de cuisson.

L'objet de l'invention est atteint grâce à une soupape de verrouillage pour couvercle de récipient de cuisson sous pression, constituée par un premier élément mobile axialement susceptible d'adopter une position étanche de verrouillage dans laquelle le couvercle du récipient ne peut être ouvert, ou une position non étanche de déverrouillage dans laquelle le couvercle du récipient peut être ouvert, un cylindre de coulissement étant ménagé dans la partie inférieure de la soupape de façon à ce que ledit cylindre soit en communication avec la pression ambiante du récipient, caractérisée en ce que ledit premier élément mobile axialement est le corps de la soupape qui coulisse librement entre ladite position étanche de verrouillage et ladite position non étanche de déverrouillage, ladite soupape comprenant un second élément constitué d'un piston, d'une tige de piston s'étendant axialement depuis le piston et se prolongeant au-delà du fond du cylindre par un perçage prévu au fond du cylindre, un moyen de rappel agissant sur le piston contre la pression régnant dans l'enceinte, et d'une tête d'indication disposée à l'extrémité libre de la tige, le second élément étant mobile axialement par rapport au premier.

Selon l'invention, les principaux éléments sont mobiles l'un par rapport à l'autre: le corps est mobile axialement par rapport au couvercle et le piston est également mobile par rapport au corps. Le corps mobile est l'élément clé concernant la sécurité du dispositif, puisqu'il assure la fonction de verrouillage. Sa sécurité est assurée, notamment par l'absence d'ouverture susceptible d'être obturée par une particule lors de la cuisson.

Grâce à cette soupape, on peut éviter l'élévation de la pression au delà d'un seuil de sécurité déterminé dans l'enceinte de cuisson si le couvercle est incorrectement fermé. Ce seuil pourrait correspondre par exemple à une pression sensiblement équivalente à la pression atmosphérique.

Selon une forme d'exécution préférentielle de la soupape de verrouillage, le second élément permet d'indiquer d'une part si le premier élément est en position de verrouillage ou déverrouillage et d'autre part, lorsque ledit premier élément est en position de verrouillage, au moins un niveau de pression de cuisson. On assure ainsi de façon totalement indépendantes les fonctions de verrouillage et d'indication du niveau de la pression.

Selon une autre forme d'exécution préférentielle, la soupape de verrouillage comprend également au moins un orifice d'évacuation prévu dans la paroi du cylindre, ledit orifice étant mis en communication avec l'extrémité ouverte du cylindre lorsque le piston est soumis à une force de pression correspondant à un niveau de surpression. La soupape selon l'invention permet ainsi d'éliminer l'excès de pression en cas de surpression dans l'enceinte de cuisson. Le niveau de pression correspondant à une surpression est défini en fonction des caractéristiques de l'article de cuisson et des normes de sécurité à respecter, afin d'éviter tout danger pour l'utilisateur. Une telle pression peut correspondre par exemple à une valeur correspondant à environ deux fois la pression de fonctionnement normal.

Selon une autre forme d'exécution préférentielle de la soupape de verrouillage, la tête d'indication est susceptible de laisser paraître au moins un repère d'indication de basse pression et/ou au moins un repère d'indication de haute pression, lesdits repère étant révélés grâce au déplacement du piston, en communication avec la pression de l'enceinte et coulissant sous l'effet de la pression, le moyen de rappel calibré permettant au piston de prendre une position donnée en fonction d'un niveau de pression donné. On obtient de cette façon la possibilité d'indiquer différents niveaux de pression.

L'objet de l'invention est également atteint grâce à un récipient de cuisson sous pression comprenant une soupape de verrouillage, constituée par un élément mobile axialement susceptible d'adopter une position étanche de verrouillage dans laquelle le couvercle du récipient ne peut être ouvert, ou une position non étanche de déverrouillage dans laquelle le couvercle du récipient peut être ouvert, un cylindre de coulissement étant ménagé dans la partie inférieure de la soupape de façon à ce que ledit cylindre soit en communication avec la pression ambiante du récipient, caractérisé en ce que ledit élément mobile axialement est la soupape qui coulisse librement entre ladite position étanche de verrouillage et ladite position non étanche de déverrouillage, ladite soupape comprenant un piston mobile axialement dans le cylindre sous l'effet de la pression régnant dans l'enceinte, une tige de piston s'étendant axialement depuis le piston et se prolongeant au-delà du fond du cylindre par un perçage prévu au fond du cylindre, un moyen de rappel agissant sur le piston contre la pression régnant dans l'enceinte, une tête d'indication disposée à l'extrémité libre de la tige, et en ce que la tête d'indication permet d'indiquer d'une part si la soupape est en position de verrouillage ou déverrouillage et d'autre part, lorsque la soupape est en position de verrouillage, au moins un niveau de pression de cuisson.

Ainsi, l'invention permet de simplifier la construction des articles de cuisson sous pression, de minimiser le nombre de composants et d'optimiser le prix de revient.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels :
- La figure 1 montre, selon une vue générale en coupe transversale, la partie supérieure d'un récipient de cuisson pourvu du dispositif d'ouverture/fermeture du couvercle à mâchoires de type avantageux, comprenant une soupape selon l'invention.
- La figure 2 montre, selon une vue de dessus, un récipient de cuisson pourvu du même dispositif, dans lequel les mâchoires sont en position de fermeture du couvercle.
- La figure 3 montre, selon une vue de dessus identique à celle de la figure 2, les mâchoires étant en position d'ouverture.
- Les figures 4a à 4e illustrent des vues en coupe détaillées de la soupape de verrouillage selon l'invention qui sert également de moyen d'indication du niveau de la pression et/ou de soupape de limitation de la pression.
- Les figures 5a, 5b et 5c, illustrent des vues en coupe détaillées de la soupape de verrouillage selon l'invention qui sert également de moyen d'indication du niveau de la pression et/ou de soupape de limitation de la pression, appliquée à un exemple de dispositif d'ouverture/fermeture de type connu.

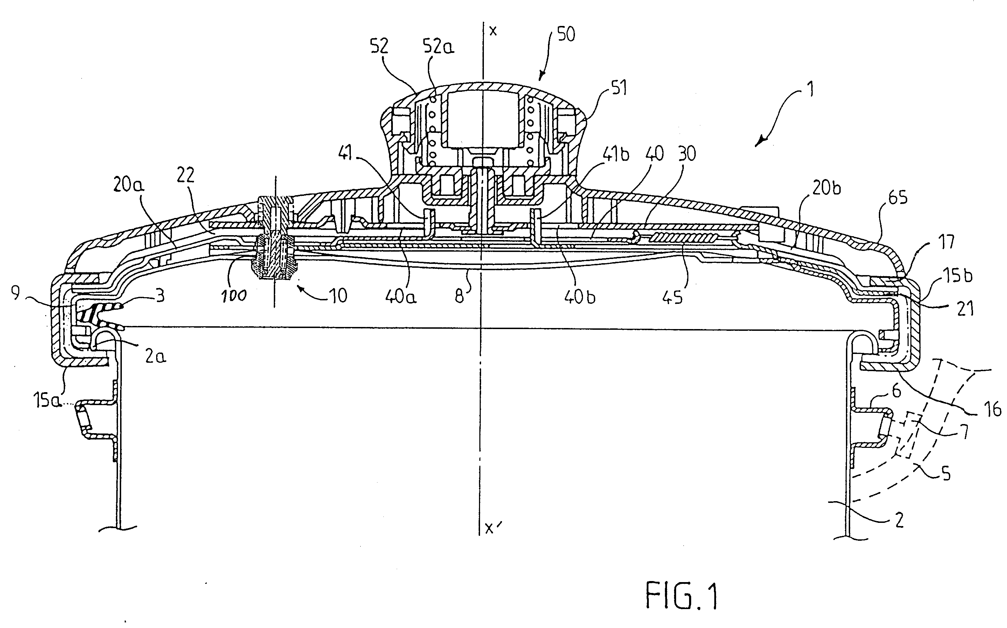

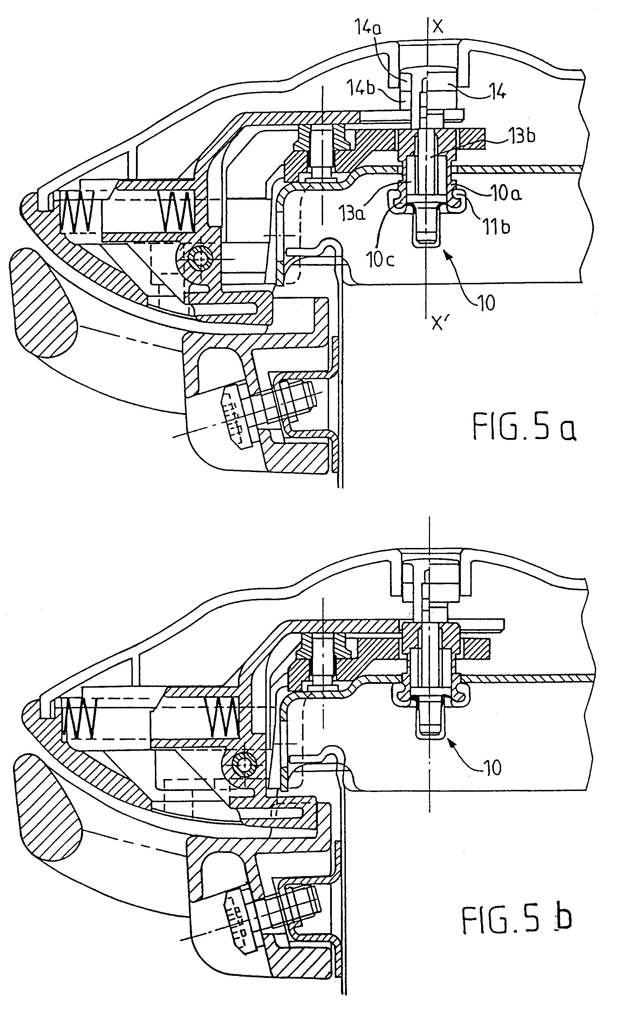

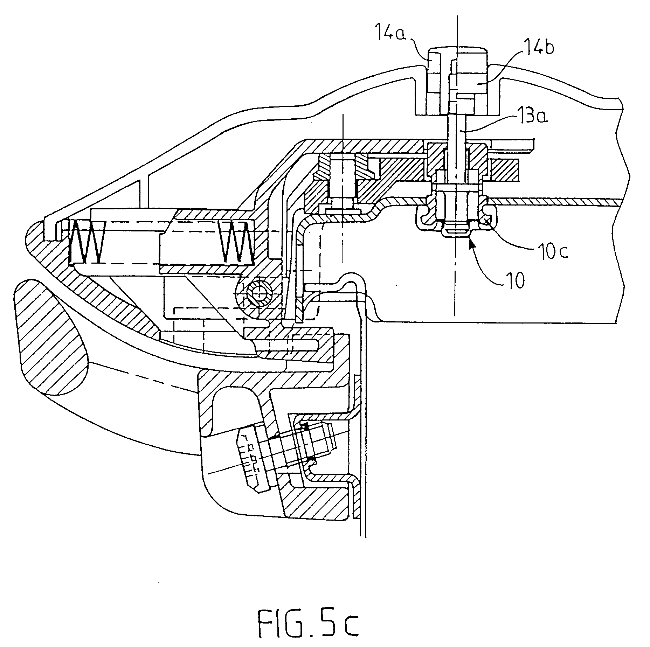

Les récipients de cuisson sous pression comprennent en général des moyens de fermeture destinés à assurer la fermeture d'un couvercle 1 sur une cuve 2, de manière à former un récipient de cuisson, de préférence sous pression, tel qu'un autocuiseur. Les figures 1 à 4 correspondent à un premier type de moyens de fermeture du couvercle. La soupape de verrouillage selon l'invention est appliquée en premier lieu à ce type de fermeture tel que décrit ci-après. Par la suite, la soupape de verrouillage selon l'invention est appliquée à un second type de moyens de fermeture correspondant aux figures 5a, 5b et 5c. Il est évident que la soupape de verrouillage selon l'invention peut être appliquée, sans sortir du cadre de l'invention, à tout type de moyens de fermeture remplissant une fonction similaire.

Le récipient est par exemple constitué d'une cuve de forme sensiblement cylindrique, d'axe de révolution x-x', sur laquelle le couvercle 1 est destiné à être rapporté de manière étanche, par exemple par l'intermédiaire d'un joint d'étanchéité 3, par exemple un joint à lèvres.

La cuve 2 est de manière classique réalisée à partir d'un matériau métallique tel que de l'inox et pourvu d'un fond thermoconducteur solidaire de la cuve 2, par exemple par frappe à chaud. La cuve comporte également des organes de préhension tels que des poignées 5 fixées sur les parois de la cuve 2 par l'intermédiaire de pattes d'attaches 6 et de vis 7.

Le couvercle 1 comporte un disque de fermeture 8 profilé, pourvu à sa périphérie d'une zone en forme de gorge 9 servant de siège de réception du joint d'étanchéité 3, et assumant avec ce dernier l'étanchéité de la fermeture du couvercle 1.

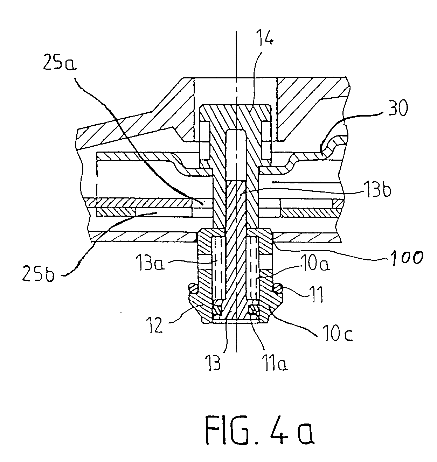

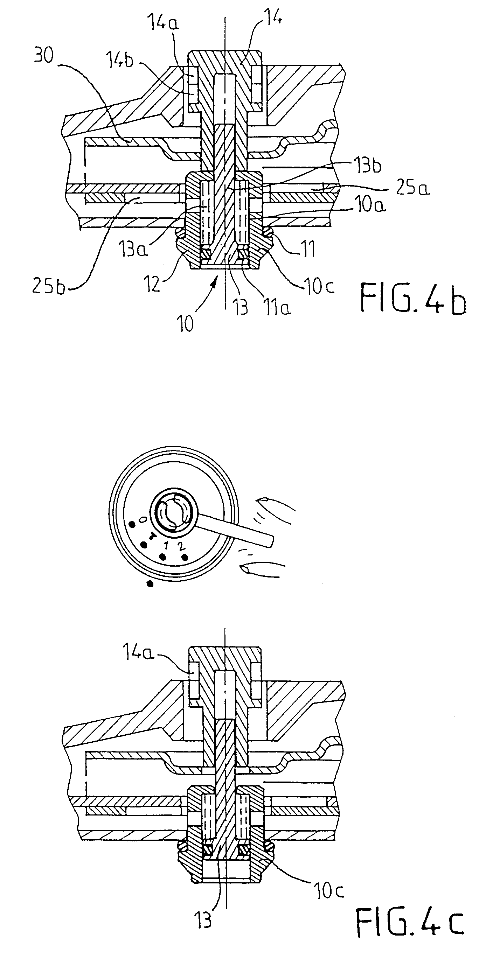

Le disque de fermeture 8 est pourvu d'au moins un perçage 100 permettant le passage et le montage d'une soupape de verrouillage 10, objet de la présente invention, montée à coulissement libre axial dans ledit perçage entre une position basse de butée (telle que montrée à la figure 4a par exemple), et une position haute de butée (telle que montrée à la figure 4b par exemple).

Avantageusement, l'étanchéité à la vapeur entre la soupape de verrouillage 10 et le perçage 100 est améliorée par interposition d'un joint 11, ce dernier étant maintenu en position par appui sur une collerette 12 formant la partie radiale externe inférieure de la soupape de verrouillage 10.

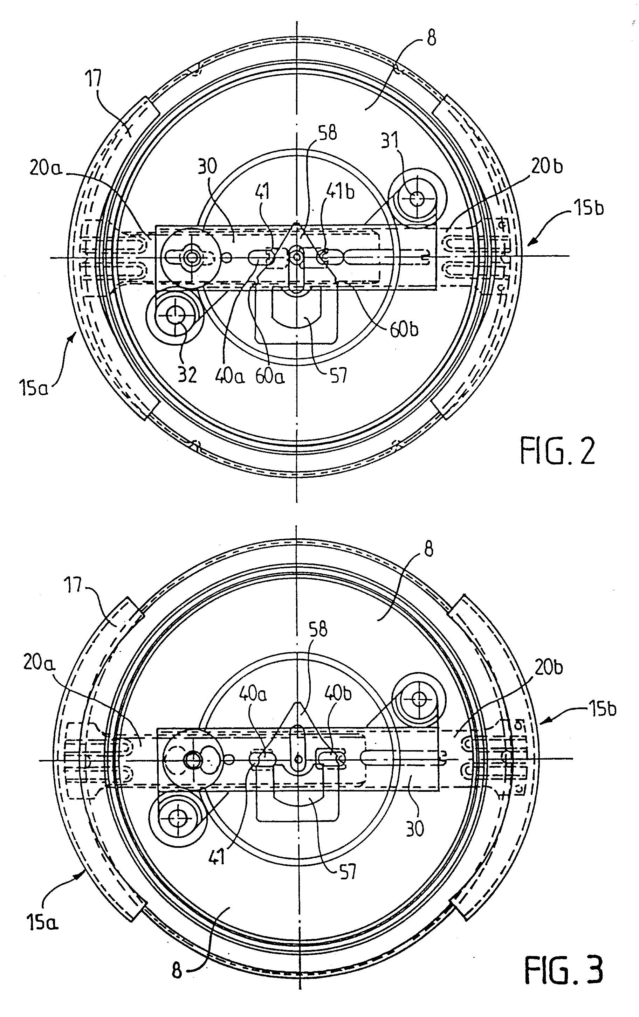

Le couvercle 1 comporte également au moins deux mâchoires 15a, 15b, montées radialement mobiles sur le disque de fermeture 8 entre une position de fermeture du couvercle 1 sur la cuve 2 (figures 1 et 2) et une position d'ouverture (figure 3). Les mâchoires 15a, 15b, se présentent de manière classique sous la forme de segments de profils en U adaptés à la forme du récipient, et dans le cas montré aux figures, sous la forme d'arcs de cercles de longueur déterminée. Chaque mâchoire 15 comporte un rebord inférieur 16 et un rebord supérieur 17 permettant d'enserrer respectivement le rebord périphérique 2a de la cuve 2 et la limite supérieure de la gorge 9. Chaque mâchoire 15a, 15b, est montée mobile sur le couvercle par l'intermédiaire d'éléments entraîneurs incluant des bras entraîneurs associés 20a, 20b, diamétralement opposés et solidaires par une extrémité 21, par exemple par soudage, du rebord supérieur 17. Chaque bras entraîneur 20a, 20b, se présente sous la forme d'un profilé métallique par exemple rectiligne, de profil adapté à celui du disque de fermeture 8 et de section transversale en U, dont l'âme est tournée vers l'extérieur du récipient et dont les ailes 22 s'étendent également vers l'extérieur du récipient.

Les bras entraîneurs 20a, 20b, présentent une longueur suffisante de manière à pouvoir être superposés, du moins en partie, lors de leur déplacement radial. Les bras entraîneurs 20a, 20b, sont autoguidés radialement l'un dans l'autre, le bras 20a formant le bras mâle et le 20b formant le bras femelle, le bras mâle coulissant dans le bras femelle. Le guidage relatif des bras 20a, 20b, est obtenu par coopération et frottement des ailes 22 de chacun des bras 20a, 20b. Un tel montage permet bien évidemment de réduire les risques de déformation possible lors du coulissement radial de chacun des bras 20a, 20b, et de maîtriser parfaitement le déplacement linéaire de chaque mâchoire 15a, 15b.

Chaque bras entraîneur, 20a, 20b, est pourvu d'une lumière de verrouillage 25a, 25b (figure 4a), ménagée à travers l'âme de chaque bras. La position de chaque lumière 25a, 25b est déterminée en fonction de la longueur de chaque bras 20a, 20b pour que les lumières 25a, 25b soient en position d'alignement lorsque les mâchoires 15a, 15b, sont en position de fermeture. Simultanément la position des lumières 25a, 25b, ainsi que la position du perçage 100, et donc de la soupape 10, est choisie pour que lorsque les mâchoires 15a et 15b sont en position de fermeture, les lumières 25a, 25b, ainsi que le perçage 100 soient alignés. Cette disposition permet au corps 10c de la soupape de verrouillage 10 selon l'invention d'occuper la position déterminée correspondant à la pression régnant dans le récipient, et en particulier d'occuper sa position haute (figure 4b) dans laquelle le corps 10c de la soupape 10 s'engage dans chacune des lumières 25a, 25b, pour verrouiller les mâchoires dans leur position de fermeture. Une telle position n'est bien évidemment acquise que lorsque les mâchoires 15a, 15b, occupent avec précision leur position de fermeture qui seule permet le passage de la soupape 10 simultanément dans les lumières 25a, 25b. Dans le cas où l'alignement des lumières 25a, 25b n'est pas obtenu lors de la tentative de fermeture, le corps 10c de la soupape de verrouillage 10 ne peut monter, ce qui génère une fuite de vapeur hors du récipient empêchant toute montée en pression.

Avantageusement, le guidage du mouvement linéaire et radial des bras entraîneurs 20a, 20b, est assuré par des moyens de guidage supplémentaires qui sont solidaires du couvercle 1.

Selon une variante, les moyens de guidage sont formés par une pièce de support 30 qui enserre les bras entraîneurs 20a, 20b, sur la majeure partie de leur longueur.

Selon une version avantageuse, la pièce support 30 est formée d'une plaque de section transversale en U enserrant et recouvrant les bras entraîneurs 20a, 20b, la face inteme de l'âme du U étant tournée vers le disque de fermeture 8. La plaque support 30 est avantageusement solidaire du disque de fermeture 8 par l'intermédiaire de deux points d'ancrage 31, 32, situés de part et d'autre de l'axe longitudinal de la plaque support 30. Les points d'ancrage 31, 32, peuvent être constitués de moyens de fixations tels que des vis, ou au contraire également servir de siège pour le passage de moyens de régulation de la pression.

A titre de variante il est également possible de monter la plaque de support 30 de manière inversée, la face inteme de la plaque support 30 étant tournée vers l'extérieur du récipient, les bras 20a, 20b, coulissant l'un dans l'autre ainsi que dans ladite plaque support. Dans cette position, la plaque support 30 enserre et supporte les bras 20a, 20b.

Selon une autre variante de réalisation, les moyens de guidage peuvent être constitués de rampes ou de moyens équivalents, solidaires ou partie intégrante du disque de fermeture 8.

Dans tous les cas, et en particulier dans le cas où une plaque support 30, présentant un profil en U est utilisée, les moyens de guidage assument, outre une fonction d'aide supplémentaire au coulissement linéaire des bras entraîneurs 20a, 20b, une fonction complémentaire de rigidification de l'ensemble mécanique assurant le déplacement radial des mâchoires 15a, 15b.

La course de déplacement des bras entraîneurs 20a, 20b, entre chacune de leur position limite, correspondant à la position d'ouverture et de fermeture des mâchoires 15a, 15b, est limitée par l'intermédiaire d'une fente 40, ménagée de préférence dans le bras mâle 20a, dans laquelle peut se déplacer un ergot 41 solidaire du bras femelle 20b. La course de déplacement des bras 20a, 20b, est ainsi limitée par la mise en butée de l'ergot 41 contre l'une ou l'autre des deux extrémités de la fente 40.

Selon un mode de réalisation particulier la plaque support 30 comporte une ouverture alignée avec les lumières 25a, 25b, ainsi qu'avec le perçage 100, permettant le déplacement de la soupape de verrouillage 10 selon l'invention. Un tel montage permet le coulissement relatif des bras entraîneurs 20a, 20b, lorsque le corps 10c de la soupape de verrouillage 10 est dans sa position basse, ce qui assure simultanément le libre déplacement des mâchoires 15a, 15b.

Avantageusement les bras entraîneurs 20a, 20b, sont ramenés en permanence en position de fermeture par un moyen de rappel élastique constitué par exemple d'un ressort 45 interposé entre deux jambages respectivement solidaires de chacun des bras entraîneurs 20a, 20b.

Le dispositif d'ouverture/fermeture comporte également un moyen de commande 50 du mouvement des mâchoires 15a, 15b, permettant d'amener chaque mâchoire dans l'une ou l'autre de leur position fixe.

Le moyen de commande 50, les moyens constitutifs du dispositif d'ouverture/fermeture à mâchoires illustré à la figure 1 ainsi que le fonctionnement de ce dispositif sont décrits en détails dans les demandes de brevets européens N° 95420188.5 et 95420187.7 du même déposant dont le contenu est intégré à la présente demande.

Selon une version avantageuse, le moyen de commande 50 forme l'organe de préhension du couvercle 1 et est constitué d'un organe de commande 56 monté mobile selon une direction sensiblement radiale sur le couvercle 1 et couplé cinématiquement avec un bouton de commande 52 monté mobile sur le couvercle 1 selon une direction sensiblement axiale.

Le couvercle 1 peut compter une plaque d'habillage 65 recouvrant l'ensemble du mécanisme, ladite plaque étant prise en sandwich entre la plaque support 30 et le pommeau 51.

De manière concise, le fonctionnement du dispositif d'ouverture/fermeture est le suivant :

La mise en place du couvercle 1 sur la cuve 2 nécessite l'ouverture des mâchoires 15a, 15b, et l'actionnement radial du poussoir 56 ce qui permet de faire coulisser la zone d'actionnement triangulaire 58 qui vient progressivement engager par ses flancs les ergots 41, 41b (figure 2). Le déplacement progressif du poussoir 56 permet d'écarter progressivement les éléments entraîneurs et en particulier les bras entraîneurs 20a, 20b, et simultanément les mâchoires 15a, 15b. La translation du poussoir 56 selon une direction radiale permet donc la translation des deux mâchoires 15a, 15b. La fin de la translation est déterminée par le positionnement de chaque ergot 41, 41b, dans les évidements associés 60a, 60b. Au delà de cette translation la position limite des mâchoires 15a, 15b est également déterminée par la mise en butée de l'ergot 41 contre l'extrémité de la fente 40. Dans la position ainsi atteinte, les mâchoires 15a, 15b, sont en position stable d'ouverture et permettent ainsi un centrage du couvercle 1 sur le bord de la cuve 2.

La fermeture du récipient, c'est-à-dire l'atteinte par les mâchoires 15a, 15b, de leur position de fermeture, est obtenue par pression de la paume de la main sur le bouton de pommeau 52 qui est par conséquent actionné axialement. Son enfoncement dans le pommeau 51 provoque l'engagement de la surface d'engagement 54 avec sa surface complémentaire 55 ménagée sur le bouton poussoir 56, lequel va progressivement reculer selon une direction radiale externe. Au cours de cette translation en sens inverse, les ergots 41, 41b, sont tout d'abord libérés des évidements 60a, 60b, les mâchoires 15a, 15b, étant ensuite progressivement rappelées l'une vers l'autre vers leur position de fermeture. Le rappel vers cette position de fermeture est obtenu par l'action de rappel du ressort 45 permettant le positionnement de chaque mâchoire 15a, 15b, entre le couvercle 1 et sous le rebord 2a de la cuve 2.

Le récipient étant ainsi fermé de manière étanche, la pression peut désormais monter et provoquer le passage du corps 10c de la soupape de verrouillage 10 dans sa position haute à travers les lumières 25a, 25b, lesquelles en position de fermeture complète des mâchoires 15a, 15b, sont coaxiales. L'engagement du corps 10c de la soupape de verrouillage 10 à travers les lumières 25a, 25b permet de verrouiller en position chacun des bras entraîneurs 20a, 20b, et simultanément chaque mâchoire correspondante.

Selon la présente invention, on assure une montée en pression en toute sécurité puisque le passage de la soupape de verrouillage dans les lumières de verrouillage 25a, 25b, ne peut intervenir que si les bras d'entraînement 20a, 20b, et donc les mâchoires 15a, 15b, sont en position de fermeture parfaite. La soupape de verrouillage 10 s'oppose par ailleurs à tout déplacement radial des mâchoires 15a, 15b. Le déplacement radial et linéaire des bras entraîneurs 15a, 15b, est par ailleurs obtenu sans risque de déformation en raison de la présence d'une succession de moyens de guidage formés par le coulissement des bras intérieurs l'un à l'autre et par la plaque support 30.

A titre de variante complémentaire, il est évidemment possible d'avoir recours à des bras entraîneurs 20a, 20b qui ne sont pas montés relativement l'un par rapport à l'autre en position de chevauchement, le verrouillage étant obtenu à l'aide d'une soupape de verrouillage 10 associée à chacun des bras entraîneurs 25a, 25b.

Selon la forme d'exécution préférentielle de l'invention, la soupape de verrouillage 10 (figures 4a à 4e) comprend un corps 10c, dans lequel est prévu un cylindre de coulissement 10a ménagé dans la partie inférieure dudit corps de la soupape de façon à communiquer avec la pression ambiante du récipient. Un piston 13 disposé de façon étanche, par exemple grâce à un joint 11a contournant disposé entre le rebord périphérique du piston et la paroi interne du cylindre 10a, est maintenu en position basse (vers l'intérieur du récipient) par un moyen de rappel 13a. Ce moyen de rappel 13a est par exemple constitué d'un ressort disposé axialement entre le piston et le fond du cylindre. La tige du piston 13b, s'étend axialement au delà du fond du cylindre 10a grâce à un perçage prévu à cet endroit. Une tête d'indication 14 reliée à la tige du piston 13b au niveau de la portion proéminente du cylindre 10a, s'étend axialement vers l'extérieur du récipient. Le corps 10c de la soupape 10 selon cette variante peut coulisser librement entre une position haute (fig. 4b) et une position basse (fig. 4a) tel que cela a déjà été décrit précédemment. Selon une variante d'exécution, l'étanchéité de la soupape peut également être réalisée au moyen d'une membrane flexible 11b de type connu.

La conformation de la tête d'indication 14 est telle que :
- en position basse du corps 10c, sa partie supérieure est de préférence légèrement enfoncée dans le couvercle, de façon à être difficilement visible par l'utilisateur.
- en position relevée du corps 10c (fig. 4b), le dessus de la tête est sensiblement concomitant avec la paroi supérieure du couvercle, ou dépasse légèrement cette paroi. L'utilisateur, voyant apparaître la tête 14, sait que le corps 10c de la soupape de verrouillage est en position "verrouillage" ; la pression commence alors à s'établir dans l'enceinte. Par contre, si la tête 14 demeure en position enfoncée, l'utilisateur est automatiquement prévenu que la pression ne peut s'établir dans l'enceinte, vraisemblablement à cause d'une mauvaise fermeture du couvercle.

La tête d'indication 14 comprend également des repères d'indication, correspondant à des niveaux de pression donnés régnant dans l'enceinte. Par exemple, un premier repère 14a indique un niveau de basse pression ; un second repère 14b indique un niveau de haute pression. Ainsi, lorsque l'utilisateur souhaite obtenir un niveau de pression donné dans l'enceinte de cuisson, il peut ajuster l'intensité de la source de chaleur située sous le récipient et/ou positionner un sélecteur de type connu (figures 4c et 4d) selon le niveau de pression (ou selon le type de cuisson) désiré.

La figure 4c illustre la situation où l'utilisateur a sélectionné la cuisson à basse pression (sélecteur en position 1 dans le cas où l'article de cuisson est muni d'un tel sélecteur). Dès que le niveau de pression de l'enceinte atteint une valeur donnée correspondant à une force de réaction pré-calibrée du moyen de rappel 13a, le piston 13 s'enfonce légèrement de façon à libérer le repère "basse pression" 14a. La pression dans l'enceinte peut alors se situer autour de 40 à 60 kPa, par exemple.

La figure 4d illustre la situation où l'utilisateur a sélectionné la cuisson à haute pression (sélecteur en position 2 dans le cas où l'article de cuisson est muni d'un tel sélecteur). Dès que le niveau de pression de l'enceinte atteint une valeur donnée correspondant à une force de réaction pré-calibrée du moyen de rappel 13a, le piston 13 s'enfonce encore davantage de façon à libérer le repère "haute pression" 14b. La pression de l'enceinte peut alors correspondre à une valeur se situant par exemple autour de 80 à 100 kPa.

Selon diverses variantes d'exécution, différents repères, correspondant à différents niveaux de pression, peuvent être prévus de la sorte.

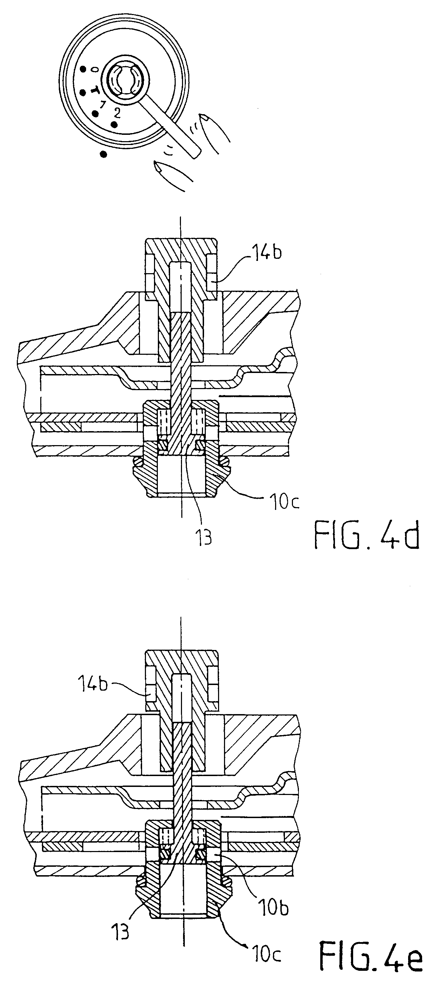

Une variante d'exécution de la soupape 10 selon l'invention, illustrée à la figure 4e, permet d'éviter toute formation de surpression dans l'enceinte de cuisson. A cette fin, au moins un orifice d'évacuation 10b est prévu. Cet orifice se situe au niveau de la portion supérieure du cylindre 10a. Le piston 13 agissant contre la force exercée par le moyen de rappel 13a atteint la position correspondant à l'orifice 10b uniquement dans les cas où la pression de l'enceinte tendrait à dépasser une limite supérieure préétablie. Dans un tel cas, le piston serait poussé par la surpression en position extrême (figure 4e), permettant l'évacuation de la pression par les orifices libérés. Dès que le niveau de pression redevient acceptable, le moyen de rappel repousse le piston en position de fonctionnement normal, par exemple en mode "haute pression".

Une telle variante est avantageuse puisqu'elle permet d'atteindre un haut niveau de sécurité de fonctionnement, particulièrement recherché pour ce type de récipient de cuisson. ll devient également possible de supprimer une des soupapes de surpression, simplifiant ainsi la construction de l'ensemble et diminuant son coût.

La demande de brevet intemationale PCT N° WO-94/16605, (du même déposant), dont le contenu est intégré à la présente demande, décrit un autre type de dispositif d'ouverture/fermeture avantageux pour les articles de cuisson dont le couvercle comporte un mode de fermeture rotatif, comme par exemple du type à baïonnette. Dans cette demande, la soupape de limitation de flux (16, 17, 18) illustrée dans la demande citée en référence aux figures 1 et 3, est, dans la présente invention, remplacée par la soupape 10 préalablement décrite.

Les caractéristiques préalablement décrites, relatives à la soupape selon l'invention, s'appliquent également à cette forme d'exécution.

Ainsi, la soupape 10 est montée librement mobile selon l'axe x-x' (figure 5a). Elle peut se déplacer entre une position basse, correspondant sensiblement à la pression atmosphérique, et une position haute illustrée à la figure 5b, dans laquelle la garniture d'étanchéité 11b, par exemple une membrane de type connu, permet la fermeture étanche en position haute.

Le joint torique présente toutefois l'avantage de faciliter la réalisation de la fonction soupape de sûreté, telle que décrite dans la forme d'exécution précédente.

Dans la position basse du corps 10c de la soupape 10, et dans toutes les positions intermédiaires de la soupape 10 précédant sa position d'étanchéité montrée à la figure 5b, il y a libre circulation de l'air entre l'extérieur et le volume interne de la cuve.

Les autres caractéristiques techniques concemant la construction et le fonctionnement demeurent similaires à celles prévues dans le document cité ci-dessus. Ainsi, il est également important de noter que l'ouverture de l'appareil de cuisson est rendu impossible tant que la pression n'est pas redevenue normale dans l'appareil puisque le maintien de la soupape 10 dans sa position haute empêche tout coulissement du verrou dans la direction permettant l'ouverture du couvercle.

L'indication du niveau de pression à l'aide de la tête 14 se fait de façon similaire à la précédente forme d'exécution.

## Revendications

1. Soupape de verrouillage (10) pour couvercle de récipient de cuisson sous pression, constituée par un premier élément mobile axialement susceptible d'adopter une position étanche de verrouillage dans laquelle le couvercle du récipient ne peut être ouvert, ou une position non étanche de déverrouillage dans laquelle le couvercle du récipient peut être ouvert, un cylindre de coulissement (10a) étant ménagé dans la partie inférieure de la soupape de façon à ce que ledit cylindre soit en communication avec la pression ambiante du récipient, caractérisée en ce que ledit premier élément mobile axialement est le corps (10c) de la soupape (10) qui coulisse librement entre ladite position étanche de verrouillage et ladite position non étanche de déverrouillage, ladite soupape comprenant un second élément constitué d'un piston (13), d'une tige (13b) de piston s'étendant axialement depuis le piston (13) et se prolongeant au-delà du fond du cylindre (10a) par un perçage prévu au fond du cylindre, un moyen de rappel (13a) agissant sur le piston (13) contre la pression régnant dans l'enceinte, et d'une tête d'indication (14) disposée à l'extrémité libre de la tige (13b), le second élément étant mobile axialement par rapport au premier.

2. Soupape de verrouillage selon la revendication 1, dans laquelle le second élément permet d'indiquer d'une part si le premier élément (10a) est en position de verrouillage ou déverrouillage et d'autre part, lorsque ledit premier élément est en position de verrouillage, au moins un niveau de pression de cuisson.

3. Soupape de verrouillage selon l'une des revendications 1 ou 2, dans laquelle ladite position étanche de verrouillage correspond à la position haute du corps (10c).

4. Soupape de verrouillage selon l'une des revendications 1 à 3, dans laquelle ladite position non étanche de déverrouillage correspond à la position basse du corps (10c).

5. Soupape de verrouillage selon l'une des revendications précédentes, dans laquelle le second élément est mobile axialement sous l'effet de la pression régnant dans l'enceinte agissant contre le piston (13).

6. Soupape de verrouillage selon l'une des revendications précédentes, dans laquelle le cylindre de coulissement (10a) est ménagé dans le second élément.

7. Soupape de verrouillage selon l'une des revendications précédentes, dans laquelle la position de la tête d'indication (14) est directement perceptible par l'utilisateur.

8. Soupape de verrouillage selon l'une des revendications précédentes, dans laquelle le moyen de rappel (13a) est un ressort calibré en fonction des niveaux de pression régnant dans l'enceinte de cuisson.

9. Soupape de verrouillage selon l'une des revendications précédentes, dans laquelle le ressort est disposé axialement entre le piston et le fond du cylindre.

10. Soupape de verrouillage selon l'une des revendications précédentes, comprenant également au moins un orifice d'évacuation (10b) prévu dans la paroi du cylindre, ledit orifice étant mis en communication avec l'extrémité ouverte du cylindre lorsque le piston est soumis à une force de pression correspondant à un niveau de surpression.

11. Soupape de verrouillage selon l'une des revendications précédentes, dans laquelle la tête d'indication (14) est susceptible de laisser paraître au moins un repère d'indication (14a) de basse pression et/ou au moins un repère d'indication (14b) de haute pression, lesdits repères étant révélés grâce au déplacement du piston (13), en communication avec la pression de l'enceinte et coulissant sous l'effet de la pression, le moyen de rappel (13a) calibré permettant au piston de prendre une position donnée en fonction d'un niveau de pression donné.

12. Récipient de cuisson sous pression comprenant une soupape de verrouillage (10), constituée par un élément mobile axialement susceptible d'adopter une position étanche de verrouillage dans laquelle le couvercle du récipient ne peut être ouvert, ou une position non étanche de déverrouillage dans laquelle le couvercle du récipient peut être ouvert, un cylindre de coulissement (10a) étant ménagé dans la partie inférieure de la soupape de façon à ce que ledit cylindre soit en communication avec la pression ambiante du récipient, caractérisé en ce que ledit élément mobile axialement est le corps de la soupape (10) qui coulisse librement entre ladite position étanche de verrouillage et ladite position non étanche de déverrouillage, ladite soupape comprenant un piston (13) mobile axialement dans le cylindre de coulissement sous l'effet de la pression régnant dans l'enceinte, une tige (13b) de piston s'étendant axialement depuis le piston (13) et se prolongeant au-delà du fond du cylindre (10a) par un perçage prévu au fond du cylindre, un moyen de rappel (13a) agissant sur le piston (13) contre la pression régnant dans l'enceinte, une tête d'indication (14) disposée à l'extrémité libre de la tige (13b), et en ce que la tête d'indication permet d'indiquer d'une part si la soupape (10) est en position de verrouillage ou déverrouillage et d'autre part, lorsque la soupape est en position de verrouillage, au moins un niveau de pression de cuisson.

## Claims

1. A locking valve (10) for the lid of a vessel for cooking under pressure, the valve being constituted by a first axially movable element capable of adopting a sealed locking position in which the lid of the vessel cannot be opened, and a non-sealed unlocking position in which the lid of the vessel can be opened, a sliding cylinder (10a) being provided in the bottom portion of the valve in such a manner that said cylinder is in communication with the ambient pressure in the vessel, the valve being characterized in that said first axially movable element is the body (10c) of the valve (10) which slides freely between said sealed locking position and said non-sealed unlocking position, said valve comprising a second element constituted by a piston (13), a piston rod (13b) extending axially from the piston (13) and extending beyond the end of the cylinder (10a) via a hole provided in the end of the cylinder, return means (13a) acting on the piston (13) against the pressure that obtains in the enclosure, and an indicator head (14) disposed at the free end of the rod (13b), the second element being axially movable relative to the first.

2. A locking valve according to claim 1, in which the second element serves to indicate firstly whether the first element (10a) is in its locking or unlocking position, and secondly, when said first element is in its locking position, at least one level of cooking pressure.

3. A locking valve according to claim 1 or 2, in which said sealed locking position corresponds to the high position of the body (10c).

4. A locking valve according to any one of claims 1 to 3, in which said non-sealed unlocking position corresponds to the low position of the body (10c).

5. A locking valve according to any preceding claim, in which the second element is axially movable under the effect of the pressure that obtains in the enclosure acting against the piston (13).

6. A locking valve according to any preceding claim, in which the sliding cylinder (10a) is formed in the second element.

7. A locking valve according to any preceding claim, in which the position of the indicator head (14) is directly perceivable by the user.

8. A locking valve according to any preceding claim, in which the return means (13a) is a spring calibrated as a function of the pressure levels that obtain inside the cooking enclosure.

9. A locking valve according to any preceding claim, in which the spring is disposed axially between the piston and the end of the cylinder.

10. A locking valve according to any preceding claim, also comprising at least one exhaust orifice (10b) provided through the wall of the cylinder, said orifice being put into communication with the open end of the cylinder when the piston is subjected to a pressure force corresponding to an excess pressure level.

11. A locking valve according to any preceding claim, in which the indicator head (14) is suitable for allowing at least one low pressure indicator mark (14a) and/or at least one high pressure indicator mark (14b) to appear, said marks being revealed by displacement of the piston (13) in communication with the pressure of the enclosure and sliding under the effect of that pressure, the calibrated return means (13a) enabling the piston to take up a given position as a function of a given pressure level.

12. A vessel for cooking under pressure and including a locking valve (10) constituted by an axially movable element capable of adopting a sealed locking position in which the lid of the vessel cannot be opened, or a non-sealed unlocking position in which the lid of the vessel can be opened, a sliding cylinder (10a) being provided in the bottom portion of the valve in such a manner that said cylinder is in communication with the ambient pressure of the vessel, the vessel being characterized in that said axially movable element is the body of the valve (10) which slides freely between said sealed locking position and said non-sealed unlocking position, said valve including, in the sliding cylinder, a piston (13) that is axially movable under the effect of the pressure that obtains in the enclosure, a piston rod (13b) extending axially from the piston (13) and projecting beyond the end of the cylinder (10a) via a hole through the end of the cylinder, return means (13a) acting on the piston against the pressure that obtains in the enclosure, and an indicator head (14) disposed at the free end of the rod (13b), and in that the indicator head serves to indicate both whether the valve (10) is in the locking position or the unlocking position, and, when the valve is in the locking position, at least one level of cooking pressure.

## Patentansprüche

1. Verriegelungsventil (10) für einen Deckel eines Druckkochbehälters, gebildet durch ein axial bewegliches erstes Element, das eine dichte Verriegelungsstellung, in welcher der Deckel des Behälters nicht geöffnet werden kann, oder eine nichtdichte Entriegelungsstellung einnehmen kann, in welcher der Deckel des Behälters geöffnet werden kann, wobei in dem unteren Abschnitt des Ventils ein Verschiebezylinder (10a) so angeordnet ist, daß er sich in Verbindung mit dem Außendruck des Behälters befindet, dadurch gekennzeichnet, daß das axial bewegliche erste Element der Körper (10c) des Ventils (10) ist, der frei zwischen der dichten Verriegelungsstellung und der nichtdichten Entriegelungsstellung gleitet, wobei das Ventil ein zweites Element aufweist, das durch einen Kolben (13), eine Kolbenstange (13b), die sich axial von dem Kolben (13) ausgehend erstreckt und bis jenseits des Bodens des Zylinders (10a) durch eine Bohrung hindurch verlängert ist, die im Boden des Zylinders vorgesehen ist, ein Rückstellmittel (13a), das auf den Kolben (13) entgegen dem in dem Behälter herrschenden Druck wirkt, und durch einen Anzeigekopf (14) gebildet ist, das an dem freien Ende der Stange (13b) angeordnet ist, wobei das zweite Element bezüglich des ersten Elementes axial beweglich ist.

2. Verriegelungsventil nach Anspruch 1, bei dem das zweite Element zum einen ermöglicht anzuzeigen, ob sich das erste Element (10a) in der Verriegelungsstellung oder in der Entriegelungsstellung befindet, und zum anderen ermöglicht, wenigstens ein Kochdruckniveau anzuzeigen, wenn sich das erste Element in der Verriegelungsstellung befindet.

3. Verriegelungsventil nach einem der Ansprüche 1 und 2, bei dem die dichte Verriegelungsstellung der oberen Stellung des Körpers (10c) entspricht.

4. Verriegelungsventil nach einem der Ansprüche 1 bis 3, bei dem die nichtdichte Entriegelungsstellung der unteren Stellung des Körpers (10c) entspricht.

5. Verriegelungsventil nach einem der vorhergehenden Ansprüche, bei dem das zweite Element unter der Wirkung des in dem Behälter herrschenden und gegen den Kolben (13) wirkenden Drucks axial beweglich ist.

6. Verriegelungsventil nach einem der vorhergehenden Ansprüche, bei dem der Verschiebezylinder (10a) in dem zweiten Element angeordnet ist.

7. Verriegelungsventil nach einem der vorhergehenden Ansprüche, bei dem die Stellung des Anzeigekopfes (14) direkt vom Benutzer wahrnehmbar ist.

8. Verriegelungsventil nach einem der vorhergehenden Ansprüche, bei dem das Rückstellmittel (13a) eine Feder ist, die in Abhängigkeit von den in dem Kochbehälter herrschenden Druckniveaus kalibriert ist.

9. Verriegelungsventil nach einem der vorhergehenden Ansprüche, bei dem die Feder axial zwischen dem Kolben und dem Boden des Zylinders angeordnet ist.

10. Verriegelungsventil nach einem der vorhergehenden Ansprüche, das auch wenigstens eine Ausströmöffnung (10b) aufweist, die in der Wand des Zylinders vorgesehen ist, wobei die Öffnung mit dem offenen Ende des Zylinders in Verbindung steht, wenn der Kolben einer Druckkraft ausgesetzt ist, die einem Überdruckniveau entspricht.

11. Verriegelungsventil nach einem der vorhergehenden Ansprüche, bei dem der Anzeigekopf (14) wenigstens eine Anzeigemarke (14a) für hohen Druck und/oder wenigstens eine Anzeigemarke (14b) für niedrigem Druck erscheinen lassen kann, wobei die Marken mittels der Verstellung des Kolbens (13) freigelegt werden, der mit dem Druck des Behälters in Verbindung steht und unter der Wirkung dieses Drucks verstellt wird, wobei das kalibrierte Rückstellmittel (13a) dem Kolben ermöglicht, in Abhängigkeit von einem gegebenen Druckniveau eine gegebene Stellung einzunehmen.

12. Druckkochbehälter mit einem Verriegelungsventil (10), gebildet durch ein axial bewegliches Element, das eine dichte Verriegelungsstellung, in welcher der Deckel des Behälters nicht geöffnet werden kann, oder eine nichtdichte Entriegelungsstellung einnehmen kann, in welcher der Deckel des Behälters geöffnet werden kann, wobei in dem unteren Abschnitt des Ventils ein Verschiebezylinder (10a) so angeordnet ist, daß der Zylinder mit dem Umgebungsdruck des Behälters in Verbindung steht, dadurch gekennzeichnet, daß das axial bewegliche Element der Körper des Ventils (10) ist, der frei zwischen der dichten Verriegelungsstellung und der nichtdichten Entriegelungsstellung verschiebbar ist, wobei das Ventil einen Kolben (13) aufweist, der in dem Verschiebezylinder unter der Wirkung des in dem Behälter herrschenden Drucks axial beweglich ist, eine Kolbenstange (13b), die sich axial von dem Kolben (13) aus erstreckt und bis jenseits des Bodens des Zylinders (10a) durch eine im Boden des Zylinders vorgesehene Bohrung hindurch verlängert ist, ein Rückstellmittel (13a), das auf den Kolben (13) entgegen dem in dem Behälter herrschenden Druck einwirkt, und einen Anzeigekopf (14), der an dem freien Ende der Stange (13b) angeordnet ist, und daß der Anzeigekopf zum einen anzeigen kann, ob sich das Ventil (10) in der Verriegelungsstellung oder der Entriegelungsstellung befindet, und zum anderen wenigstens ein Kochdruckniveau anzeigen kann, wenn sich das Ventil in der Verriegelungsstellung befindet.
